# FASCICULE DE BREVET EUROPEEN

(11) **EP 0 490 005 B1**
(45) Date de publication et mention de la délivrance du brevet: **10.07.1996**
(21) Numéro de dépôt: 90403556.5
(22) Date de dépôt: 12.12.1990
(51) Int. Cl.: C05F 9/02, B03B 9/06, B02C 17/00

(54) **Appareil pour la transformation d'ordures ménagères**
Vorrichtung zur Umwandlung von Hausmüll
Apparatus for the conversion of domestic waste

(43) Date de publication de la demande: 17.06.1992
(73) Titulaire: Peguy, Guy, F-65140 Rabastens de Bigorre (FR)
(72) Inventeur: Peguy, Guy, F-65140 Rabastens de Bigorre (FR)

(56) Documents cités:
- EP-A- 0 008 621
- FR-A- 469 772
- FR-A- 2 299 086
- FR-A- 2 471 811
- FR-A- 2 600 640
- FR-A- 2 649 692
- GB-A- 1 105 143
- US-A- 2 952 492

## Description

La présente invention concerne un appareillage pour la transformation d'ordures ménagères en un produit pour fertiliser les sols pour les substances fermentescibles et en des produits divers pour les substances infermentescibles ou refusées par la chaîne de récupération des matières organiques.

En principe, les ordures ménagères des agglomérations urbaines sont collectées et déversées dans une fosse, puis grossièrement broyées afin d'être incinérées ou stockées sur des décharges à ciel ouvert.

De nos jours, on connaît des appareils pour la transformation d'ordures ménagères en compost, tel que le brevet français 2 600 640, dont la méthode consiste à briser et mélanger la matière de base dans un tunnel plus ou moins long avec des chaînes portées par des axes.

Le tunnel est doté de bouches d'air chaud pour sécher les matières, puis les produits ferreux sont écartés et les matières restantes sont dirigées dans un mixeur cylindrique comportant des couteaux rotatifs, puis sont déversées sur des tamis obliques et à l'aplomb les uns des autres.

On connaît aussi des procédés pour la transformation d'ordures ménagères en compost selon le brevet français n° 2 471 811 qui relate un broyeur dilacérateur à fléaux, associé à un ou plusieurs cribles, ledit broyeur dilacérateur comportant deux arbres parallèles tournant en sens inverse et portant chacun une série de fléaux qui se croisent sur la quasi-totalité de leur longueur dans des plans intercalés.
Selon cette conception, les fléaux du type chaînes à maillons de transmission mécanique, travaillent sur toute leur longueur ; par ce fait, devant répondre à des efforts qui les sollicitent sur toute leur longueur.

Il existe également le brevet U.S.A 2 952 492 (C.O FINN) qui comprend un broyeur muni de trois arbres tournant dans le même sens et portant des chaînes qui travaillent sur leur longueur. Enfin, le brevet G.B.-A-1 105 143 (HAZEMAG) relate un procédé utilisant des broyeurs portant des couteaux sur des arbres parallèles, et sortant des broyeurs, les déchets sont successivement passés sur des tamis horizontaux.

Compte tenu de l'importance du nombre du cubage journalier à traiter et de la nature très hétérogène des matières de base, les fléaux du type chaînes à maillons de transmission mécanique sont très insuffisants sur le plan de la solidité, entraînant de fréquentes ruptures.

La présente invention a pour but de remédier à ces inconvénients et permet d'obtenir un produit constitué de matières organiques pour enrichir les sols et la ré-utilisation des matières infermentescibles, principalement les matières plastiques, pour la fabrication d'objets divers. L'invention, telle qu'elle est présentée dans les revendications, se rapporte à un appareillage pour la mise en oeuvre comprenant principalement le broyage de la matière de base dans un broyeur, puis passage dans un trommel et récupération des refus, puis la matière de base est traitée avec deux autres unités chauffées comportant respectivement un broyeur associé à un trommel, et séparément les refus sont traités, chauffés et mis sous presse. Les broyeurs comportent des arbres partiellement superposés sur des plans différents, lesquels arbres portent des chaînes non mécaniques dont leur extrêmité opposée au point d'attache est munie d'un embout spécial antiusure, lesquels broyeurs sont juxtaposés à des trommels. Une autre particularité du broyeur réside en ce que les chaînes portées par des arbres tournants et différents, s'effleurent uniquement par leur embout anti-usure formant un couloir très étroit d'aspiration de la matière de base.

L'invention sera mieux comprise par la suite du texte à l'aide des dessins annexés aux présentes, à titre d'exemple non limitatif.

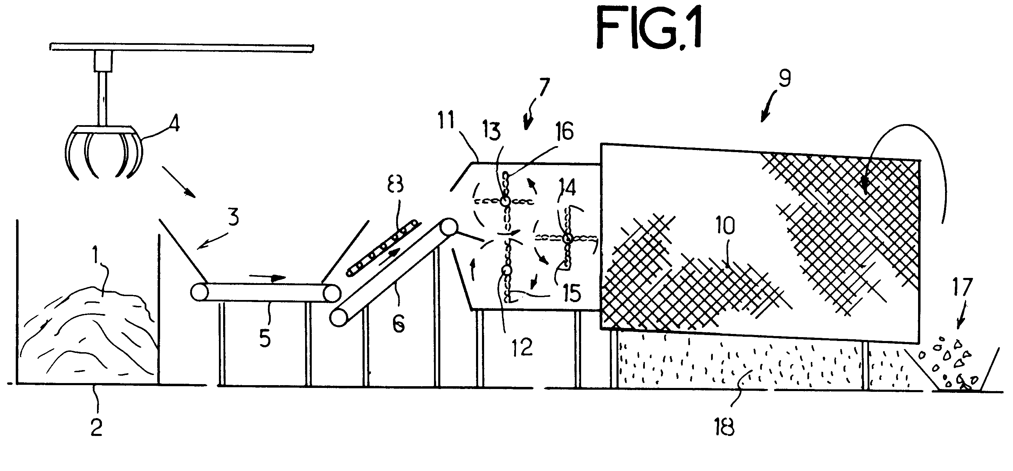

La figure 1 représente, succintement, une partie de la chaîne du procédé de fabrication.

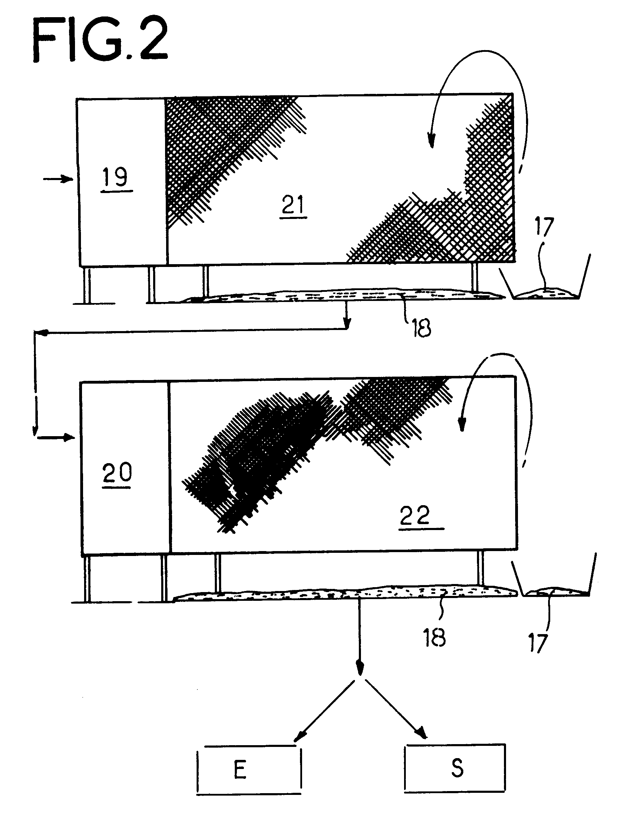

La figure 2 représente, succintement, la deuxième partie de la chaîne du procédé pour le traitement de la matière de base.

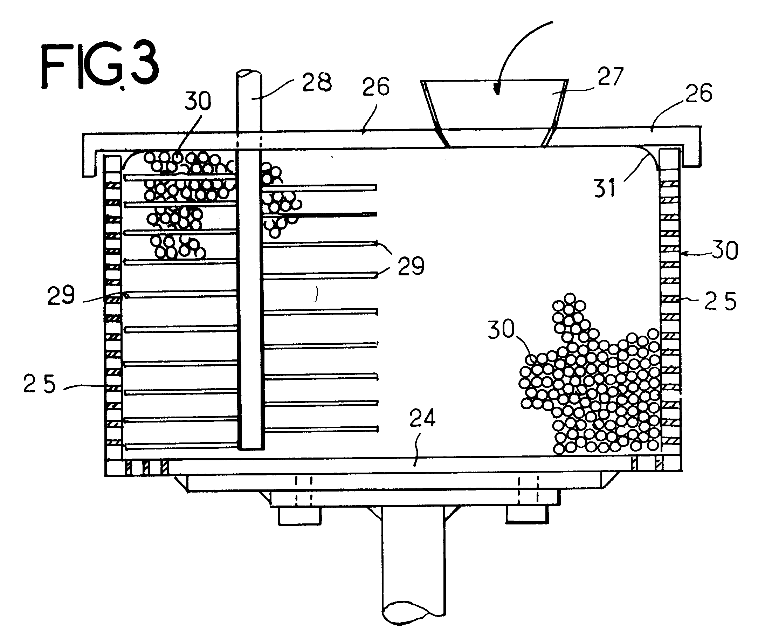

La figure 3 représente, le broyeur pour réduire en petites particules les éléments en plastique. L'appareillage récupère les déchets ayant subi un broyage primaire, puis ayant séjourné en andains non compactés, à ciel ouvert, lesquels andains ont été retournés et humectés si nécessaire jusqu'à fermentation complète en aérobie. Cette fermentation peut être accélérée par adjonction de ferments bactériens.
Un premier examen préliminaire de la matière fermentée brute donne les résultats quantitatifs suivants :
Le pourcentage d'eau contenu dans le produit brut est de 40 à 45 % environ.
Le pourcentage de métaux ferreux et non ferreux est de 1 à 3 % environ.
Le pourcentage de plastiques est de 8 à 14 % environ.
Le pourcentage de produit fini exploitable est de 40 à 50 % environ.

L'analyse chimique et physico-chimique de la matière de base après fermentation à ciel ouvert se décompose comme suit :
Ph 7,4 à 7,8 - Résistivité : 700 à 1000 cm
Matière sèche 75 à 85 %
Teneurs exprimées en g/kg sur produit sec

| Eléments fertilisants assimilables : | | | |
|---|---|---|---|
| Na20 | 0,6 à 1,30 | P205 | 0,18 à 0,25 |
| K20 | 1,6 à 2,3 | Mgo | 1,2 à 1,70 |
| | | Cao | 21,00 à 23,00 |

| Matière organique : | | |
|---|---|---|
| 100 à 120 | N2 Total | 5,8 à 6,5 |
| C mini 50 à 60 | C/N mini | 7,7 à 9,2 |
| C maxi 70 à 90 | C/N maxi | 13,8 à 15,5 |

| Composition minérale : | | | |
|---|---|---|---|
| Zn | 1,5 à 2,5 | Cu | 2,4 à 0,7 |
| P Total | 23 à 25 | Fe | 30 à 34 |
| Mn | 1,2 à 1,4 | Ca | 26 à 28 |
| Mg | 3 à 4 | | |

### 1ère étape :

La matière de base 1, venant des andains fermentés, est séchée au cours des manipulations pour la transporter d'une fosse 2 pour alimenter une trémie 3 à l'aide d'un grappin 4, laquelle trémie possède un fond mobile 5 pour régulariser le débit sur un convoyeur 6 qui transporte ladite matière dans un broyeur 7.

Le moyen de séchage 8 utilisé sera de préférence à air pulsé, positionné tout au long du cheminement du produit et plus particulièrement au passage dans les trommels et convoyeurs.

### 2ème étape :

La matière est introduite dans un appareil dit broyeur 7 qui secoue et casse l'ensemble des éléments constituant ladite matière de base et les projette dans un premier trommel 9 utilisant des mailles 10 de 30 mm.

Le broyeur est constitué d'un caisson 11 étroit aux parois verticales traversées par trois arbres 12, 13 et 14 parallèles et horizontaux, lesquels arbres 12 et 13 sont superposés et tournent en sens contraire alors que l'arbre 14 est placé plus en arrière et sensiblement au milieu.

Les arbres 12, 13 et 14 portent respectivement des chaînes 15, réparties sur leur longueur, lesquelles chaînes 15 ont à leur extrêmité opposée aux arbres tournants un embout 16 spécial à haute résistance d'usure. Chacun des arbres 12, 13 et 14 entraînent des chaînes 15 qui effleurent avec les extrêmités de leur embout 16 les extrêmités des embouts des chaînes des autres arbres provoquant un couloir d'aspiration très étroit par où passe la matière de base ; cette dernière est violemment frappée par lesdits embouts et est projetée dans un trommel 9. La vitesse de rotation et le nombre de chaînes sont fonction du résultat que l'on désire otenir. Le trommel 9 proprement dit tourne avec des moyens connus et appropriés et comporte une maille qui forme un tunnel renfermant en partie supérieure une brosse cylindrique et longitudinale tournant sur elle-même dont les filaments rigides nettoient les mailles obstruées.
Les matières 18 organiques et les diverses autres suffisamment broyées passent au travers de la maille du trommel, quant aux plus grosses appelées refus 17 elles tombent par l'extrêmité à l'extérieur dudit trommel dans un contenant pour être retraitées.

### 3ème étape :

Afin d'obtenir une granulométrie 1 mm, les matières 18 organiques subissent successivement le passage dans plusieurs autres unités comportant des broyeurs 19 et 20 et des trommels 21 et 22, et au fur et à mesure de l'avancement du traitement des matières 18 les unités porteront des chaînes de plus en plus fines et en plus grand nombre, et auront des mailles de plus en plus petites. Naturellement, le nombre d'unités broyeur-trommel peut varier selon la nature de la matière de base et la granulométrie désirée. Les trommels 21 et 22 à mailles plus petites sont dotés de gicleurs d'air disposés sur la longueur du tunnel.

Les gicleurs fonctionnent par intermittence ou en continu selon les besoins.

Le nombre des chaînes et la forme des embouts peuvent varier suivant la granulométrie désirée.

Le produit de base a en finalité une teneur en eau de 8 à 13 % et pour être plus performant une addition soit de lombricompost soit de tout autre additif permet de l'adapter au besoin du terrain.

Pour obtenir le degré de dessiccation désiré des matières organiques, les trommels sont munis de moyens à air chaud pulsé, et afin de réduire les pertes calorifiques les tunnels sont capotés en partie supérieure et sur les côtés.

L'élimination des objets ferreux s'effectue au moyen de tambours magnétiques disposés sur les convoyeurs du circuit de la matière de base, de telle manière qu'à la sortie du dernier trommel, la matière organique de petite granulométrie n'en comporte quasiment pas ou en pourcentage dérisoire.

Ensuite, la matière 18 organique est dirigée vers un poste (E) d'ensachage ou sur des lieux (S) de stockage.

### 4ème étape :

Recyclage des refus ou matières non infermentescibles ; après séchage complémentaire si nécessaire, triage des plastiques par ventilation et par aspiration.

### 5ème étape :

Les refus ou éléments en matière synthétique infermentescible sont dirigés vers un broyeur 23 comportant une enceinte cylindrique 25 dont le fond 24 et le couvercle 26 sont plats et horizontaux.

Le couvercle 26 comporte une ouverture 27 par laquelle sont introduites les matières plastiques et ledit couvercle est traversé par un arbre 28 vertical et excentré qui porte des chaînes 29 semblables au broyeur précédemment décrit.

Une des particularités réside en ce que l'arbre 28 est excentré de manière que l'extrêmité de chaque chaîne 29 effleure en rotation, sur une même ligne transversale, la paroi intérieure cylindrique, laquelle paroi cylindrique tourne sur son axe en sens contraire des chaînes 29 portées par l'arbre excentré 28.

L'arbre 28 en tournant, au moyen d'un moteur et paliers, entraîne les chaînes qui dilacèrent puis pulvérisent les éléments synthétiques ou plastiques introduits à l'intérieur.

L'enceinte cylindrique est entièrement percée de trous 30 variant de 2 à 10 mm, laquelle enceinte en tournant expulse, du fait de la force centrifuge la matière plastique au travers desdits trous 30.

### 6ème étape :

A la sortie de l'enceinte, la matière recueillie est portée à des températures variant entre 30 et 50° dans des silos chauffants, puis transférée dans des moules, de formes diverses, et mise sous presse afin d'obtenir une densité variant de 1,2 à 1,5 bar, pour un bon amalgame de la matière. Possibilité de faire un mélange de plastique avec des éléments verres et cailloux pulvérisés. Le processus de mise en moule est le même que pour les plastiques.

Le couvercle 26 est positionné sur l'enceinte cylindrique de manière à l'effleurer mais sans la toucher et est amovible au moyen d'un support actionné à l'aide de verrins ou tous autres moyens connus. Pour rendre le couvercle hermétique, celui-ci est muni d'une lèvre périphérique 31 en caoutchouc par exemple.

Les moules et silos sont à double parois pour permettre soit la circulation d'air chaud, soit la pose de résistance électrique.

Les appareils, objet des présentes, sont plus particulièrement conçus pour l'obtention d'engrais pour les sols et pour fabriquer avec les matières infermentescibles des produits tels que : éléments de clôture, plaques gravillonnées, pavé auto-bloquants, etc...

## Revendications

1. Appareil pour la transformation d'ordures ménagères, en un produit pour fertiliser les sols et en des produits divers, comprenant plusieurs unités de broyeur-trommel alimentées au moyen d'une trémie à fond mobile, d'un convoyeur doté de moyens de séchage et de tambours magnétiques, caractérisés en ce qu'une première unité comporte un broyeur (7) constitué d'un caisson (11) étroit aux parois verticales traversées par trois arbres (12), (13), et (14) parallèles et horizontaux, dont les deux arbres (12) et (13) sont superposés et tournent en sens contraire, et le troisième arbre (14) est placé plus en arrière et sensiblement au milieu des deux arbres superposés, et ces trois arbres portent respectivement des chaînes (15) réparties sur leur longueur, lesquelles chaînes sont munies à leur extrémité opposée à leur point d'attache d'un embout (16) ; en ce que les unités suivantes, pour les produits fertilisants, comportent respectivement un broyeur avec des chaînes et un trommel à mailles de plus en plus fines ; en ce que pour les matières infermentescibles, le broyeur (23) comporte une enceinte cylindrique (25) entièrement percée de trous (30), au fond et couvercle plat, et cette enceinte tourne sur son axe en sens contraire d'un arbre (28) vertical et excentré portant des chaînes (29).

2. Appareil selon la revendication 1, caractérisé en ce que les chaînes (15) d'un arbre tournant, du broyeur (7), effleurent avec leurs embouts les extrémités des chaînes des autres arbres tournant, formant un couloir d'aspiration très étroit par où passe la matière de base.

3. Appareil selon les revendications 1 et 2, caractérisé en ce que les chaînes (15) des arbres tournant frappent la matière de base par leur extrémité munie d'un embout spécial.

4. Appareil selon les revendications 1 et 3, caractérisé en ce que l'arbre (28) vertical et excentré, du broyeur des refus, porte des chaînes (29) munies d'un embout, semblables aux broyeurs des matières fermentescibles.

5. Appareil selon les revendications 1 et 4, caractérisé en ce que l'arbre (28) est excentré de manière qu'une extrémité de chaque chaîne (29), portant l'embout, effleure en rotation, sur une même ligne transversale, la paroi intérieure cylindrique.

6. Appareil selon les revendications 1 et 4, caractérisé en ce que les broyeurs, pour les matières fermentescibles et infermentescibles comportent des chaînes non mécaniques.

7. Appareil selon les revendications 1 et 2, caractérisé en ce que les unités suivantes pour les produits fertilisants comportent respectivement un broyeur avec des chaînes à embout de plus en plus fines et en plus grand nombre.

8. Appareil selon les revendications 1 et 2, caractérisé en ce que les embouts des extrémités des chaînes, de forme variable, sont spéciaux à haute résistance d'usure.

## Claims

1. Machine for processing household waste into fertiliser and various other products including several fragmenter-trommels supplied from a hopper with moving base and from a conveyor fitted with dryers and magnetic drums characterised by the first unit having a fragmenter (7) comprising a narrow enclosure (11) with vertical walls crossed by three parallel, horizontal shafts (12), (13) and (14) the two shafts (12) and (13) being vertically aligned and turning in opposite directions and the third shaft (14) positioned behind and approximately half way between the two vertically aligned shafts, these three shafts each having chains (15) at intervals along their length, the free ends of which are fitted with a swingle (16); also characterised by the following units for fertilisers each having a chain fragmenter and trommel with increasingly fine mesh; also characterised by the fragmenter (23) for non-fermentable matter having an entirely perforated (30) cylindrical enclosure (25) with flat cover and base and which rotates about its axis in the opposite direction to a vertical eccentric shaft (28) with chains (29).

2. Machine according to claim 1, characterised by the chains (15) of one rotating shaft of the fragmenter (7) whose swingles brush the ends of the chains on the other rotating shafts, making a very narrow intake channel through which the unprocessed matter passes.

3. Machine according to claims 1 and 2, characterised by the chains (15) of the rotating shafts hitting the unprocessed matter with their ends fitted with a special swingle.

4. Machine according to claims 1 and 3, characterised by the vertical eccentric shaft (28) of the waste fragmenter having chains (29) fitted with a swingle in the same way as fragmenters for fermentable matter.

5. Machine according to claims 1 and 4 characterised by the shaft (28) being eccentric so that the swingle end of each chain (29) in rotation brushes against the internal cylindrical wall in the same line.

6. Machine according to claims 1 and 4 characterised by the fragmenters for fermentable and non-fermentable matter having non-mechanical chains.

7. Machine according to claims 1 and 2 characterised by the following units for fertilisers each having a fragmenter with a greater number of chains with smaller and smaller swingles.

8. Machine according to claims 1 and 3 characterised by the chains having special wear resistant swingles of different shapes.

## Patentansprüche

1. Gerät zur Verarbeitung von Müll als Düngungsmittel und verschiedene Produkte, bestehend aus mehreren über eine Mulde mit beweglichem Boden versorgten Siebtrommelzerkleinerereinheiten, einem mit Trocknungsmitteln und Magnettrommeln versehenen Förderer, dadurch gekennzeichnet, daß eine erste Einheit einen Zerkleinerer (7) aufweist, bestehend aus einem engen Fach (11) mit senkrechten Wandungen durch welche drei parallele und waagenrechte Wellen (12), (13), und (14) geführt werden, wobei die beiden Wellen (12) und (13) übereinander angeordnet sind und im entgegengesetzten Sinn drehen, und die dritte Welle (14) sich mehr nach hinten und etwa in der Mitte der beiden übereinander angeordneten Wellen befindet, und diese drei Wellen tragen jeweils auf ihrer gesamten Länge verteilten Ketten (15), welche Ketten am dem dem Befestigungspunkt entgegengesetzte Ende mit einem Ansatzstück (16) versehen sind; ferner dadurch gekennzeichnet, daß die nachfolgenden Einheiten für die Düngungsmittel jeweils einen Zerkleinerer mit Ketten und eine Siebtrommel mit immer feineren Korngrößen aufweisen, und daß für die nicht fermentierbaren Stoffe, der Zerkleinerer (23) eine völlig mit Löchern (30) durchbohrte zylinderförmige Einfassung (25) mit flachem Boden und flacher Abdeckung beträgt, wobei sich diese Einfassung um ihre Achse im entgegengesetzten Sinne zu einer senkrechten und exzentrierten mit Ketten (29) versehenen Welle (28) dreht.

2. Gerät nach Anspruch 1, dadurch gekennzeichnet, daß die Ketten (15) einer drehenden Welle des Zerkleinerers (7) mit ihren Ansatzstücken das Ende der Ketten der anderen drehenden Wellen leicht berühren, und dabei eine sehr enge Ansaugungsrinne bilden, durch welche der Grundstoff geführt wird.

3. Gerät nach den Ansprüchen 1 und 2, dadurch gekennzeichnet, daß die Ketten (15) der drehenden Wellen über ihre mit einem besonderen Ansatzstück versehenen Ende den Grundstoff zerschlagen.

4. Gerät nach den Ansprüchen 1 und 3, dadurch gekennzeichnet, daß die senkrechte und exzentrierte Welle (28) des Rückstandszerkleinerers Ketten (29) mit einem Ansatzstück trägt, wobei die Ketten mit denen der Zerkleinerer der fermentierbaren Stoffe ähnlich sind.

5. Gerät nach den Ansprüchen 1 und 4, dadurch gekennzeichnet, daß die Welle (28) so exzentriert ist, daß ein mit dem Ansatzstück versehene Ende jeder Kette (29) beim Drehen auf einer selben Längslinie die zylinderförmige Innenwandung berührt.

6. Gerät nach den Ansprüchen 1 und 4, dadurch gekennzeichnet, daß die Zerkleinerer für die fermentierbaren und nicht fermentierbaren Stoffen nicht mechanische Ketten aufweisen.

7. Gerät nach den Ansprüchen 1 und 2, dadurch gekennezeichnet, daß die nachfolgenden Einheiten für die Düngungsmittel jeweils einen Zerkleinerer mit immer feineren und zahlreicheren Ketten mit Ansatzstücken aufweisen.

8. Gerät nach den Ansprüchen 1 und 2, dadurch gekennzeichnet, daß die Ansatzstücke am Ende der Ketten unterschiedlich ausgebildet sind, und eine hohe Verschleißfestigkeit aufweisen.
